# EUROPÄISCHE PATENTANMELDUNG

(11) **EP 4 585 628 A1**
(43) Veröffentlichungstag der Anmeldung: **16.07.2025**
(21) Anmeldenummer: 24151618.6
(22) Anmeldetag: 12.01.2024
(51) Int. Cl.: C08G 16/02, C08G 16/06, C08G 18/10, C08G 18/48, C08G 18/75, C08G 18/76, C08G 18/80, C08K 3/04, C08K 3/34, C08K 5/5419, C08L 61/34, C08L 71/02

(54) **HÄRTBARE POLYMERZUSAMMENSETZUNG ENTHALTEND ALDEHYDE, VERBINDUNGEN MIT AKTIVIERTEN METHYLENGRUPPEN UND EINE BESCHLEUNIGERKOMPONENTE**

(71) Anmelder: Sika Technology AG, 6340 Baar (CH)
(72) Erfinder: KRAMER, Andreas, 8008 Zürich (CH); BURCKHARDT, Urs, 8049 Zürich (CH); HÄBERLE, Hans, 78262 Gailingen (DE); STADELMANN, Ursula, 8046 Zürich (CH)
(74) Vertreter: Sika Patent Attorneys

(57) **Zusammenfassung**

Gegenstand der Erfindung ist eine härtbare Zusammensetzung umfassend
(i) eine Hauptkomponente enthaltend mindestens eine Verbindung **A** mit Aldehydgruppen und mindestens eine Verbindung **B** mit aktivierten Methyengruppen der Formel (I), und
(ii) eine Beschleunigerkomponente enthaltend mindestens einen Beschleuniger für die Reaktion von Aldehydgruppen mit aktivierten Methylengruppen der Formel (I),
wobei mindestens eine der beiden Verbindungen **A** und **B** ein Polymer mit einem mittleren Molekulargewicht Mₙ von 500 bis 20'000 g/mol ist.

Die härtbare Zusammensetzung ist ohne besondere Schutzmassnahmen anwendbar. Die Hauptkomponente ist lagerstabil und härtet durch Beimischen der Beschleunigerkomponente schnell und zuverlässig zu einem elastischen Polymer von hoher Festigkeit, hoher Dehnbarkeit und guter Beständigkeit gegen Hitze und Wasser aus.

## Beschreibung

### Technisches Gebiet

Die Erfindung betrifft lagerstabile, bei Umgebungsbedingungen unter dem Einfluss einer Beschleunigerkomponente härtbare Polymerzusammensetzungen enthaltend Aldehyde und Verbindungen mit aktivierten Methylengruppen, sowie ihre Verwendung als elastische Klebstoffe, Dichtstoffe oder Beschichtungen.

### Stand der Technik

Härtbare Polymerzusammensetzungen, die bei Umgebungsbedingungen angewendet werden können, sind meist als sogenannte zweikomponentige Zusammensetzungen formuliert, bei welchen die an der Aushärtungsreaktion beteiligten reaktiven Verbindungen in voneinander getrennt verpackten Komponenten aufbewahrt werden. Kurz vor oder während der Applikation werden die beiden Komponenten vermischt, wodurch die reaktiven Verbindungen unter Vernetzung miteinander reagieren und die Aushärtung erfolgt. Solche Zusammensetzungen weisen aber Nachteile auf. Insbesondere muss die Dosierung und Vermischung der Komponenten sehr genau erfolgen, um die für die Vernetzungsreaktion gewollte Stöchiometrie zu gewährleisten. Ansonsten kann ein unvollständig vernetztes Produkt mit mangelhaften mechanischen Eigenschaften und klebriger Oberfläche entstehen.

Härtbare Polymerzusammensetzungen, welche als Ganzes lagerstabil sind, das heisst in einer einzigen Verpackung über einen längeren Zeitraum aufbewahrt werden können, ohne ihre Anwendbarkeit zu verlieren, werden als einkomponentige Zusammensetzungen bezeichnet. Sie sind einfach anzuwenden, da keine Mischvorgänge notwendig sind. Die Aushärtung erfolgt typischerweise durch Kontakt mit Feuchtigkeit. Bekannte feuchtigkeitshärtende Systeme sind insbesondere Isocyanatgruppen-haltige Polyurethanzusammensetzungen sowie Zusammensetzungen auf der Basis von silanfunktionellen Polymeren oder Silikonen. Diese weisen aber ebenfalls Nachteile auf. Zum einen ist ihre Aushärtung langsam und inhomogen, da sie von der Verfügbarkeit von Feuchtigkeit abhängt, welche zumeist aus der Luft in die Zusammensetzung eindringen muss. Zum anderen entstehen bei der Aushärtungsreaktion Substanzen, welche nicht in die Polymermatrix eingebunden werden und Probleme verursachen können. Bei den Polyurethanzusammensetzungen entsteht Kohlendioxid, das zu Blasenbildung führen kann. Dies kann zwar mit der Verwendung von latenten Härtern wie insbesondere Aldiminen verhindert werden. Dabei werden bei der Aushärtung aber Aldehyde freigesetzt, welche nicht in die Polymermatrix eingebunden werden und zu Problemen mit Emission und/oder Geruchsbildung führen können, oder in der ausgehärteten Zusammensetzung verbleiben, wo sie eine weichmachende Wirkung ausüben und/oder aus der Zusammensetzung migrieren können. Zusammensetzungen auf Basis von silanfunktionellen Polymeren oder Silikonen setzen bei der Aushärtung Alkohole, vor allem Methanol oder Ethanol, Essigsäure oder Oxime frei, welche giftig sind und Emissionen verursachen. Schliesslich enthalten beide Systeme gesundheitsschädliche Vernetzer, insbesondere monomere Diisocyanate oder niedrigmolekulare Silane, welche den Anwender gefährden und Schutzmassnahmen bei der Handhabung notwendig machen können.

Der Nachteil der langsamen Aushärtung von einkomponentigen Zusammensetzungen lässt sich über eine wasserhaltige Beschleunigerkomponente, auch "Booster" genannt, lösen. Diese wird bei der Anwendung zugemischt und führt zu einer schnellen Aushärtung unabhängig von Luftfeuchtigkeit, wie beispielsweise beschrieben in WO 03/059978. Gegenüber klassischen zweikomponentigen Zusammensetzungen sind solche Booster-Systeme einfacher anwendbar, da nur eine geringe Menge der Beschleunigerkomponente eingemischt und das Mischungsverhältnis nicht exakt eingehalten werden muss. Allerdings kann der Polaritätsunterschied der Komponenten zu unvollständiger Vermischung mit lokalen Schwachstellen durch Phasengrenzen führen. Ausserdem werden die durch die Toxizität der Vernetzer und die Freisetzung von nicht in die Polymermatrix eingebundenen Substanzen verursachten Probleme nicht gelöst.

US 10,563,040 beschreibt eine härtbare Zusammensetzung enthaltend ein Polyacetoacetat, ein Polyaldehyd und einen basischen Katalysator, wobei das Polyacetoacetat und der Polyaldehyd in voneinander getrennten Komponenten gelagert werden.

### Darstellung der Erfindung

Aufgabe der vorliegenden Erfindung ist es, eine härtbare Zusammensetzung zur Verfügung zu stellen, welche einfach anwendbar ist und die Nachteile des Standes der Technik überwindet, insbesondere in Bezug auf toxische Inhaltsstoffe, Blasenbildung und Emissionen durch bei der Aushärtung nicht in die Polymermatrix eingebundene Substanzen.

Überraschenderweise wird diese Aufgabe mit einer härtbaren Zusammensetzung wie in Anspruch 1 beschrieben gelöst. Die härtbare Zusammensetzung umfasst eine Hauptkomponente und eine Beschleunigerkomponente. Die Hauptkomponente ist lagerstabil und enthält mindestens eine Verbindung **A** mit Aldehydgruppen und mindestens eine Verbindung **B** mit aktivierten Methylengruppen der Formel (I), insbesondere Cyanoacetat- oder Acetoacetatgruppen. Dass Polyaldehyde mit Cyanoacetaten oder Acetoacetaten zusammen in einem gemeinsamen Gebinde lagerstabil aufbewahrt werden können, war bisher aus dem Stand der Technik nicht bekannt. Beim Einmischen der Beschleunigerkomponente in die Hauptkomponente härtet die Zusammensetzung unter Umgebungsbedingungen zu einem elastischen Polymer aus. Dadurch, dass die an der Aushärtung beteiligten Reaktivgruppen Aldehyd- und aktivierte Methylengruppen der Formel (I) in der Hauptkomponente im gewünschten stöchiometrischen Verhältnis vordosiert und vorgemischt sind, ist die Aushärtungsreaktion kaum abhängig vom Mischprozess, weder in Bezug auf das Mischungsverhältnis zwischen den Komponenten noch in Bezug auf die Homogenität der Vermischung; auch bei unvollständigem Einmischen der Beschleunigerkomponente erfolgt die Aushärtung weitgehend störungsfrei.

Die Verbindung **A** und die Verbindung **B** sind beide toxikologisch wenig bedenkliche Stoffe, welche keine Gefahrenkennzeichnung erfordern und ohne spezielle Vorkehrungen gehandhabt werden können, und die Beschleunigerkomponente benötigt keine potenziell toxischen Metallverbindungen. Die härtbare Zusammensetzung ist bei Umgebungsbedingungen gut verarbeitbar, ohne dass organische Lösemittel zum Lösen oder Verdünnen oder Wasser zum Emulgieren oder Dispergieren von Bestandteilen benötigt werden. Die Aushärtung ist nicht empfindlich auf Blasenbildung und verursacht keine Emissionen. Durch die Aushärtung entsteht ein nicht-klebriges, elastisches Polymer von hoher Festigkeit, hoher Dehnbarkeit, hohem Weiterreisswiderstand und guter Beständigkeit gegen Hitze und Wasser. Durch die Kombination dieser vorteilhaften Eigenschaften verfügt die härtbare Zusammensetzung über eine besonders einfache Handhabung ohne besondere Schutzmassnahmen und eine hohe Robustheit bei mechanischer, thermischer oder chemischer Belastung nach der Aushärtung.

Die härtbare Zusammensetzung ist besonders geeignet für die Verwendung als elastischer Klebstoff, Dichtstoff oder Beschichtung.

Weitere Aspekte der Erfindung sind Gegenstand weiterer unabhängiger Ansprüche. Besonders bevorzugte Ausführungsformen der Erfindung sind Gegenstand der abhängigen Ansprüche.

### Wege zur Ausführung der Erfindung

Gegenstand der Erfindung ist eine härtbare Zusammensetzung umfassend
(i) eine Hauptkomponente enthaltend
   - mindestens eine Verbindung **A** mit Aldehydgruppen, und
   - mindestens eine Verbindung **B** mit aktivierten Methylengruppen der Formel (I), 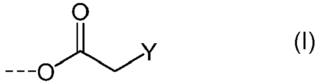 wobei Y für einen Rest der Formel ---CN , 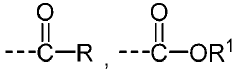 oder 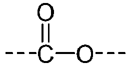 steht, R für einen einwertigen Kohlenwasserstoffrest mit 1 bis
      10 C-Atomen steht und R¹ für einen Alkylrest mit 1 bis 6 C-Atomen steht, und
(ii) eine Beschleunigerkomponente enthaltend mindestens einen Beschleuniger für die Reaktion von Aldehydgruppen mit aktivierten Methylengruppen der Formel (I),
wobei mindestens eine der beiden Verbindungen **A** und **B** ein Polymer mit einem mittleren Molekulargewicht Mₙ von 500 bis 20'000 g/mol ist, gemessen mittels Gelpermeationschromatographie (GPC) gegen Polystyrol als Standard.

Als "lagerstabil" wird eine Komponente oder Zusammensetzung bezeichnet, wenn sie bei Raumtemperatur in einem geeigneten Gebinde während längerer Zeit, typischerweise während mindestens drei Monaten bis zu sechs Monaten und mehr, aufbewahrt werden kann, ohne dass sie sich in ihren Anwendungs- oder Gebrauchseigenschaften durch die Lagerung in einem für ihren Gebrauch relevanten Ausmass verändert.

Eine gestrichelte Linie in den Formeln in diesem Dokument stellt jeweils die Bindung zwischen einem Substituenten und dem zugehörigen Molekülrest dar. Als "Molekulargewicht" wird die molare Masse (in Gramm pro Mol) eines Moleküls bezeichnet. Als "mittleres Molekulargewicht" wird das Zahlenmittel des Molekulargewichts (Mₙ) einer polydispersen Mischung von oligomeren oder polymeren Molekülen bezeichnet. Es wird mittels Gelpermeationschromatographie (GPC) gegen Polystyrol als Standard bestimmt.

Der Begriff "Polymer" umfasst auch sogenannte Oligomere mit zwei, drei oder vier Repetiereinheiten.

Als "primäre Aminogruppe" wird eine Aminogruppe bezeichnet, die an einen einzigen organischen Rest gebunden ist und zwei Wasserstoffatome trägt; als "sekundäre Aminogruppe" wird eine Aminogruppe bezeichnet, die an zwei organische Reste, welche auch gemeinsam Teil eines Rings sein können, gebunden ist und ein Wasserstoffatom trägt; und als "tertiäre Aminogruppe" wird eine Aminogruppe bezeichnet, die an drei organische Reste, welche auch zu zweit oder zu dritt Teil eines oder mehrerer Ringe sein können, gebunden ist und kein Wasserstoffatom trägt.

Mit "Poly" beginnende Substanznamen wie Polyaldehyd, Polycyanoacetat, Polyacetoacetat oder Polyol bezeichnen Substanzen, die formal zwei oder mehr der in ihrem Namen vorkommenden funktionellen Gruppen pro Molekül enthalten.

Als "Raumtemperatur" wird eine Temperatur von 23 °C bezeichnet.

Alle im Dokument erwähnten Industriestandards und Normen beziehen sich auf die zum Zeitpunkt der Einreichung der Erstanmeldung gültigen Fassungen. Gewichtsprozente (Gewichts-%) bezeichnen Massenanteile eines Bestandteils einer Zusammensetzung oder eines Moleküls, bezogen auf die gesamte Zusammensetzung oder das gesamte Molekül, falls nichts anderes angeben. Die Begriffe "Masse" und "Gewicht" werden im vorliegenden Dokument synonym benutzt.

Die Hauptkomponente enthält mindestens eine Verbindung **A** mit Aldehydgruppen.

Bevorzugt weist die Verbindung **A** eine, zwei, drei oder vier, insbesondere zwei oder drei, Aldehydgruppen und ein Molekulargewicht, oder im Fall einer oligomeren oder polymeren Verbindung **A** mittleres Molekulargewicht Mₙ, von 100 bis 20'000 g/mol auf.

Bevorzugt sind die Aldehydgruppen der Verbindung **A** direkt an einen aromatischen Ring gebunden. Eine solche Verbindung **A** ermöglicht eine besonders schnelle Aushärtung.

Besonders geeignet sind Polyaldehyde wie insbesondere Phthalaldehyd, Isophthalaldehyd, Terephthalaldehyd, 9,10-Anthracendicarbaldehyd, Naphthalindicarbaldehyd, 1,2-Cyclohexandicarbaldehyd, 1,3-Cyclohexandicarbaldehyd, 1,4-Cyclohexandicarbaldehyd, Glutaraldehyd, 1,6-Hexandialdehyd, 1,7-Heptandialdehyd, 1,8-Octandialdehyd, 1,9-Nonandialdehyd, 2-Methyl-1,8-octandialdehyd, 1,10-Decandialdehyd, 1,11-Undecandialdehyd, 1,12-Dodecandialdehyd, Maleindialdehyd, Fumardialdehyd, Tricyclo[5.2.1.0^{2,6}]decan-3(4),8(9)-dicarbaldehyd, 3,6,9-Trioxaundecan-1,11-dial, sowie Aldehydgruppen-haltige Polymere.

Bevorzugt ist die Verbindung **A** ein Polymer mit einem mittleren Molekulargewicht Mₙ von 500 bis 20'000 g/mol, besonders bevorzugt 1'000 bis 15'000 g/mol, insbesondere 2'000 bis 10'000 g/mol, und einer mittleren Aldehyd-Funktionalität von 1.6 bis 4.0, bevorzugt 1.8 bis 3.5, besonders bevorzugt 2.0 bis 3.0, insbesondere 2.2 bis 3.0.

Bevorzugt sind Aldehydgruppen-haltige Polymere mit einem Polymerrückgrat enthaltend Poly(oxyalkylen)-Einheiten und/oder Polyester-Einheiten.

Bevorzugte Oxyalkylen-Repetiereinheiten sind ausgewählt aus der Liste bestehend aus Oxy-1 ,2-propylen, Oxy-1,3-propylen, Oxy-1,4-butylen, Oxy-1,2-butylen und Oxyphenylethylen. Zusätzlich kann die Verbindung **A** einen gewissen Gehalt an Oxyethylen Einheiten aufweisen, insbesondere höchstens 25 Gewichts-% Oxyethylen bezogen auf das Gesamtgewicht der Poly(oxyalkylen)-Einheiten.

Ein besonders bevorzugtes Aldehydgruppen-haltiges Polymer enthält ein Poly-(oxy-1,2-propylen)-Rückgrat, wobei dieses einen Gehalt von 0 bis 25 Gewichts-% Poly(oxyethylen)-Einheiten bezogen auf das Poly(oxy-1,2-propylen)-Rückgrat enthalten kann, insbesondere an den Kettenenden. Aldehyd-funktionelle Polymere mit einem solchen Rückgrat sind niedrigviskos und somit besonders gut handhabbar und besonders hydrophob. Sie ermöglichen Zusammensetzungen mit besonders guter Verarbeitbarkeit, hoher Dehnbarkeit und guter Wasserbeständigkeit.

Bevorzugte Aldehydgruppen-haltige Polymere mit einem Polyester-Rückgrat sind abgeleitet von Dicarbonsäuren und Di- oder Triolen, oder von Triglyceriden, oder es sind Polyester auf Basis von Dimer- oder Trimerfettsäuren. Besonders bevorzugt sind Polyester von Dimerfettsäuren oder Polyester abgeleitet von Rizinusöl, Derivaten von Rizinusöl oder Pflanzenölen. Aldehyd-funktionelle Polymere mit einem solchen Rückgrat sind besonders hydrophob und ermöglichen Zusammensetzungen mit besonders guter Beständigkeit gegen Hitze und Wasser. Ausserdem beruhen sie auf nachwachsenden Rohstoffen und sind dadurch potenziell besonders nachhaltig.

Ein besonders bevorzugtes Aldehydgruppen-haltiges Polymer enthält zusätzlich Urethangruppen. Dies ermöglicht Zusammensetzungen mit besonders hoher Dehnbarkeit und besonders hohem Weiterreisswiderstand.

Bevorzugt ist die Verbindung **A** bzw. das Aldehydgruppen-haltige Polymer bei Raumtemperatur flüssig, insbesondere mit einer Viskosität bei 20 °C von 0.01 bis 700 Pa s, bevorzugt 0.1 bis 500 Pa s, besonders bevorzugt 0.5 bis 200 Pa s, insbesondere 1 bis 100 Pa s, gemessen mittels Kegel-Platte Viskosimeter mit Kegeldurchmesser 10 mm, Kegelwinkel 1°, Kegelspitze-Platte-Abstand 0.05 mm, Scherrate 10 s⁻¹. Solche Verbindungen sind bei Umgebungstemperaturen auch ohne Zusatz von Lösemitteln oder Verdünnern gut handhabbar.

Besonders bevorzugt als Verbindung **A** ist ein bei Raumtemperatur flüssiges Urethangruppen-haltiges Polymer mit einem mittleren Molekulargewicht Mₙ von 2'000 bis 10'000 g/mol und einer mittleren Aldehyd-Funktionalität von 1.8 bis 3.5, bevorzugt 2.0 bis 3.0, insbesondere 2.2 bis 3.0.

Bevorzugt wird ein solches Polymer erhalten aus der Reaktion von mindestens einem Hydroxyaldehyd mit mindestens einem Isocyanatgruppen-haltigen Polymer.

Als Hydroxyaldehyd geeignet ist insbesondere 2-Hydroxyacetaldehyd, 3-Hydroxybutanal, 3-Hydroxypivalaldehyd, 5-Hydroxypentanal, 2-(2-Hydroxyethoxy)acetaldehyd, 3-(2-Hydroxyethoxy)propanal, 5-Hydroxymethylfurfural, alkoxyliertes o-, m- oder p-Hydroxybenzaldehyd oder alkoxyliertes Vanillin, wobei "alkoxyliert" bevorzugt für einfach oder mehrfach ethoxyliert oder propoxyliert steht, sowie 4,4'-(2-Hydroxypropan-1,3-diyl)-bis(oxy)-bis(benzaldehyd) oder 4,4'-(2-Hydroxypropan-1,3-diyl)-bis(oxy)-bis(3-methoxybenzaldehyd).

Davon bevorzugt sind Hydroxyaldehyde, deren Aldehydgruppe direkt an einen aromatischen Ring gebunden ist.

Besonders bevorzugt ist ethoxyliertes Salicylaldehyd, insbesondere 2-(2-Hydroxyethoxy)benzaldehyd, ethoxyliertes Vanillin, insbesondere 4-(2-Hydroxyethoxy)-3-methoxybenzaldehyd, oder 5-Hydroxymethylfurfural.

Ganz besonders bevorzugt ist ethoxyliertes Salicylaldehyd. Damit werden besonders farbstabile Zusammensetzungen erhalten.

Ganz besonders bevorzugt ist weiterhin 5-Hydroxymethylfurfural. Damit werden besonders gut verarbeitbare Zusammensetzungen mit besonders schneller Aushärtung erhalten.

Als Isocyanatgruppen-haltiges Polymer geeignet ist insbesondere ein Reaktionsprodukt aus der Umsetzung von mindestens einem Polyisocyanat mit mindestens einem Polyol, hergestellt nach einem bekannten Verfahren.

Als Polyisocyanat geeignet ist insbesondere ein Diisocyanat, insbesondere 1,6-Hexandiisocyanat (HDI), Isophorondiisocyanat (IPDI), 4,4'-Diisocyanatodicyclohexylmethan (H₁₂MDI), 4(2),4'-Diphenylmethandiisocyanat (MDI) oder 2,4(6)-Toluendiisocyanat, besonders bevorzugt IPDI.

Als Polyol geeignet sind insbesondere:
- Polyetherpolyole, insbesondere Polymerisationsprodukte von Ethylenoxid, 1,2-Propylenoxid, 1,2-Butylenoxid, 2,3-Butylenoxid, Styroloxid, Oxetan, Tetrahydrofuran oder Mischungen davon, wobei diese mit Hilfe eines Startermoleküls mit zwei oder mehreren aktiven Wasserstoffatomen polymerisiert sein können. Bevorzugt sind Poly(oxy-1,2-propylen)diole oder Polyoxypropylentriole, insbesondere propoxylierts Glycerin oder 1,1,1-Trimethylolpropan, wobei diese jeweils zusätzlich an den Kettenenden ethoxyliert sein können. Sie werden auch als EO-terminierte (EO-endcapped) Poly(oxy-1,2-propylen)diole oder Polyoxypropylentriole bezeichnet. Bevorzugte Polyetherpolyole weisen einen Ungesättigtheitsgrad von weniger als 0.02 mEq/g, insbesondere weniger als 0.01 mEq/g, auf.
- Polyesterpolyole, insbesondere aus der Polykondensation von Hydroxycarbonsäuren bzw. Lactonen oder von aliphatischen und/oder aromatischen Polycarbonsäuren mit zwei- oder mehrwertigen Alkoholen. Bevorzugt sind amorphe, Di- oder Trimerfettsäure-basierte Polyesterpolyole, wie sie kommerziell beispielsweise von der Firma Cargill erhältlich sind.
- Polycarbonatpolyole, erhältlich durch Umsetzung von Diolen mit Dialkylcarbonaten, Diarylcarbonaten oder Phosgen.
- Mindestens zwei Hydroxylgruppen tragende Blockcopolymere, insbesondere Polyetherpolyesterpolyole.
- Polyacrylat- und Polymethacrylatpolyole.
- Polyhydroxyfunktionelle Fette oder Öle, insbesondere natürliche Fette oder Öle wie inbesondere Rizinusöl, ethoxyliertes oder insbesondere propoxyliertes Rizinusöl, Ketonharz-modifiziertes Rizinusöl, oder durch chemische Modifizierung von natürlichen Fetten und Ölen gewonnene, sogenannte oleochemische, Polyole, wie beispielsweise unter dem Handelsnamen Sovermol^{®} (von BASF) erhältliche hydroxylierte Pflanzenöle.
- oder Polykohlenwasserstoffpolyole.

Bevorzugt sind Polyetherpolyole, Di- oder Trimerfettsäure-basierte Polyesterpolyole, Rizinusöl, Derivate von Rizinusöl oder hydroxylierte Pflanzenöle.

Besonders bevorzugt sind Polyetherpolyole, insbesondere Poly(oxy-1,2-propylen)diole oder Polyoxypropylentriole, wobei diese gegebenenfalls EO-terminiert sind. Diese ermöglichen Zusammensetzungen mit besonders hoher Dehnbarkeit und Elastizität bei hoher Wasserbeständigkeit.

Die Hauptkomponente enthält weiterhin mindestens eine Verbindung **B** mit aktivierten Methylengruppen der Formel (I).

Bevorzugt enthält die Verbindung **B** eine bis sechs aktivierte Methylengruppen der Formel (I), besonders bevorzugt zwei bis vier, insbesondere zwei bis drei, aktivierte Methylengruppen der Formel (I).

Bevorzugt ist die Verbindung **B** bei Raumtemperatur flüssig. Insbesondere weist sie eine Viskosität bei 20 °C von 0.01 bis 50 Pa s, mehr bevorzugt 0.01 bis 25 Pa s, besonders bevorzugt 0.01 bis 10 Pa s, insbesondere 0.02 bis 5 Pa s, auf, gemessen mittels Kegel-Platte Viskosimeter mit Kegeldurchmesser 10 mm, Kegelwinkel 1°, Kegelspitze-Platte-Abstand 0.05 mm, Scherrate 10 s⁻¹, für Viskositäten von weniger als 0.5 Pa s mit Kegeldurchmesser 50 mm. Eine solche Verbindung ermöglicht Zusammensetzungen, die bei Umgebungstemperatur und ohne Zusatz von Lösemitteln oder Verdünnern gut verarbeitbar sind.

Bevorzugt weist die Verbindung **B** ein Molekulargewicht, oder im Fall einer oligomeren oder polymeren Verbindung **B** mittleres Molekulargewicht Mₙ, von 100 bis 10'000 g/mol, bevorzugt 196 bis 5'000 g/mol, besonders bevorzugt 240 bis 2'500 g/mol, insbesondere 240 bis 1'500 g/mol, auf.

Bevorzugt weist die Verbindung **B** in Bezug auf die aktivierten Methylengruppen der Formel (I) ein Equivalentgewicht, oder im Fall einer oligomeren oder polymeren Verbindung **B** mittleres Equivalentgewicht, von 100 bis 2'100 g/eq, bevorzugt 114 bis 600 g/eq, insbesondere 114 bis 400 g/eq, auf.

Bevorzugt weist die Verbindung **B** in Bezug auf die aktivierten Methylengruppen der Formel (I) eine Funktionalität, oder im Fall einer oligomeren oder polymeren Verbindung **B** mittlere Funktionalität, von 1 bis 4, bevorzugt 1.5 bis 4, mehr bevorzugt 1.8 bis 3.5, besonders bevorzugt 2 bis 3, insbesondere 2.3 bis 3, auf.

Insbesondere weist die Verbindung **B** in Bezug auf die aktivierten Methylengruppen der Formel (I) ein Equivalentgewicht, oder im Fall einer oligomeren oder polymeren Verbindung **B** mittleres Equivalentgewicht, von 100 bis 2'100 g/eq, bevorzugt 114 bis 600 g/eq, insbesondere 114 bis 400 g, und eine Funktionalität, oder im Fall einer oligomeren oder polymeren Verbindung **B** mittlere Funktionalität, von 1.5 bis 4, bevorzugt 1.8 bis 3.5, mehr bevorzugt 2 bis 3, insbesondere 2.3 bis 3, auf.

In der Hauptkomponente liegt das Verhältnis der Anzahl aktivierte Methylengruppen der Formel (I) zur Anzahl Aldehydgruppen bevorzugt im Bereich von 0.7 bis 3.0, besonders bevorzugt 0.9 bis 2.5, insbesondere 0.9 bis 2.0. Dies ermöglicht eine zuverlässige Aushärtung und ein ausgehärtetes Produkt mit hoher Festigkeit bei hoher Dehnbarkeit.

Die Verbindung **B** enthält aktivierte Methylengruppen der Formel (I), 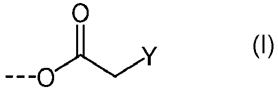 wobei Y für einen Rest der Formel ---CN , 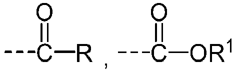 oder 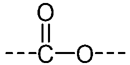 steht, R für einen einwertigen Kohlenwasserstoffrest mit 1 bis 10 C-Atomen steht und R¹ für einen Alkylrest mit 1 bis 6 C-Atomen steht.

Bevorzugt steht R für einen Alkylrest mit 1 bis 6 C-Atomen oder für Phenyl, besonders bevorzugt für Methyl, Ethyl, Propyl, Isopropyl, Butyl oder Phenyl. Am meisten bevorzugt steht R für Methyl.

Bevorzugt steht R¹ für Methyl, Ethyl oder tert-Butyl, besonders bevorzugt für Ethyl oder tert-Butyl, insbesondere für Ethyl.

Bevorzugt wird die Verbindung **B** erhalten aus der Umesterung von mindestens einer Hydroxylgruppen-haltigen Verbindung mit mindestens einer Verbindung der Formel (II), 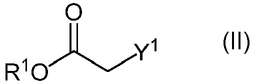 wobei Y¹ für einen Rest der Formel ---CN , 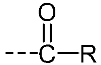 oder 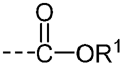 steht und R und R¹ die bereits beschriebenen Bedeutungen aufweisen.

Bevorzugt erfolgt die Umesterung bei einer Temperatur von 50 bis 150 °C unter destillativer Entfernung des freigesetzten Alkohols R¹OH und gegebenenfalls Fragmentierungsprodukten davon, gegebenenfalls unter Vakuum und gegebenenfalls in Anwesenheit von Katalysatoren.

Weiterhin möglich ist die Herstellung einer Verbindung **B** mit Cyanoacetatgruppen durch Veresterung von Cyanoessigsäure mit mindestens einer Hydroxylgruppen-haltigen Verbindung.

Weiterhin möglich ist die Herstellung einer Verbindung **B** mit Acetoacetatgruppen, indem die der Verbindung **B** zugrunde liegende Hydroxylgruppen-haltige Verbindung mit Diketen oder dem Addukt von Diketen mit Aceton (= 2,2,6-Trimethyl-4H-1,3-dioxin-4-on) umgesetzt wird, wobei im Fall des Aceton-Diketen-Addukts Aceton freigesetzt wird.

Weiterhin möglich ist die Herstellung einer Verbindung **B** mit Malonatgruppen durch Veresterung von Malonsäure mit mindestens einer Hydroxylgruppen-haltigen Verbindung.

Als Verbindung der Formel (II) geeignet ist insbesondere Methylcyanoacetat, Ethylcyanoacetat, tert-Butylcyanoacetat, Methylacetoacetat, Ethylacetoacetat, tert-Butylacetoacetat, Ethyl-3-oxohexanoat, Ethylbenzoylacetat, Malonsäuredimethylester, Malonsäurediethylester, Malonsäurediisopropylester oder Malonsäuredi-(tert-butylester).

Bevorzugt ist Ethylcyanoacetat oder tert-Butylcyanoacetat, Ethylacetoacetat oder tert-Butylacetoacetat, sowie Malonsäurediethylester.

Als Hydroxylgruppen-haltige Verbindung bevorzugt sind handelsübliche OH-funktionelle Verbindungen oder Polymere, wie insbesondere 1,2-Ethandiol, Diethylenglykol, Triethylenglykol, 1,2-Propandiol, Dipropylenglykol, Tripropylenglykol, 1,3-Propandiol, 1,4-Butandiol, 1,2-Butandiol, 2-Methyl-1,3-propandiol, 1,5-Pentandiol, 1,2-Pentandiol, Neopentylglykol, 2-Methyl-1,4-butandiol, 1,6-Hexandiol, 3-Methyl-1,5-pentandiol, 1,8-Octandiol, 1,10-Decandiol, 1,12-Dodecandiol, Polytetrahydrofurandiole, 1,3-Cyclohexandimethanol, 1,4-Cyclohexandimethanol, 1,1,1-Trimethylolethan, 1,1,1-Trimethylolpropan, Glycerin, Pentaerythrit, propoxyliertes und/oder ethoxyliertes Glycerin mit mittlerem Molekulargewicht Mₙ von 300 bis 6'000 g/mol, propoxyliertes und/oder ethoxyliertes 1,1,1-Trimethylolpropan mit mittlerem Molekulargewicht Mₙ von 300 bis 6'000 g/mol, Poly(oxy-1,2-propylen)diole mit mittlerem Molekulargewicht von 400 bis 4'000 g/mol, EO-terminierte Poly(oxy-1,2-propylen)diole mit mittlerem Molekulargewicht von 1'000 bis 4'000 g/mol, Poly(oxy-1,2-propylen)triole mit mittlerem Molekulargewicht von 400 bis 6'000 g/mol, EO-terminierte Poly(oxy-1,2-propylen)triole mit mittlerem Molekulargewicht von 3'000 bis 6'000 g/mol, Di- oder Trimerfettsäure-basierte Polyesterpolyole mit mittlerem Molekulargewicht von 1'000 bis 3'000 g/mol, Rizinusöl, Derivate von Rizinusöl oder hydroxylierte Pflanzenöle.

In einer besonders Ausführungsform der Erfindung steht Y für ---CN und die aktivierten Methylengruppen der Formel (I) sind somit Cyanoacetatgruppen. Solche Verbindungen **B** ermöglichen eine besonders zuverlässige und schnelle Aushärtung bei Kontakt mit Luftfeuchtigkeit und nach der Aushärtung eine besonders hohe Zugfestigkeit und einen hohen Weiterreisswiderstand.

Bevorzugt als Verbindung **B** mit Cyanoacetatgruppen ist ein Polymer mit einem mittleren Molekulargewicht Mₙ von 500 bis 6'000 g/mol, besonders bevorzugt 500 bis 2'000 g/mol, insbesondere 500 bis 1'000 g/mol, und einer mittleren Cyanoacetat-Funktionalität von 1.5 bis 4, bevorzugt 1.8 bis 3.5, mehr bevorzugt 2 bis 3, insbesondere 2.3 bis 3. Dies ermöglicht ausgehärtete Zusammensetzungen mit besonders hoher Dehnbarkeit.

Insbesondere ist ein solches Polymer ausgewählt aus der Liste bestehend aus dem Tricyanoacetat von ethoxyliertem und/oder propoxyliertem 1,1,1-Trimethylolpropan, dem Tricyanoacetat von ethoxyliertem und/oder propoxyliertem Glycerin, Poly(oxy-1,2-propylen)diol-bis(cyanoacetat), Ethylenoxid-Einheiten enthaltendem Poly(oxy-1,2-propylen)diol-bis(cyanoacetat), Dimerfettsäure-basiertem Polyesterdiol-bis(cyanoacetat) und Trimerfettsäure-basiertem Polyestertriol-tris(cyanoacetat).

Besonders bevorzugt ist das Tricyanoacetat von propoxyliertem 1,1,1-Trimethylolpropan) mit insgesamt einem mittleren Molekulargewicht Mₙ von 500 bis 750 g/mol.

In einer besonders bevorzugten Ausführungsform der Erfindung steht Y für

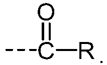

Insbesondere steht R dabei für Methyl und die aktivierten Methylengruppen der Formel (I) sind somit Acetoacetatgruppen. Solche Verbindungen **B** sind besonders einfach verfügbar und ermöglichen besonders farbstabile Zusammensetzungen mit besonders guter Verarbeitbarkeit.

Bevorzugt ist eine Verbindung **B** mit Acetoacetatgruppen ausgewählt aus der Liste bestehend aus 1,2-Propandioldiacetoacetat, Dipropylenglykoldiacetoacetat, Tripropylenglykoldiacetoacetat, 1,3-Propandioldiacetoacetat, 1,4-Butandioldiacetoacetat, 2-Methyl-1,3-propandioldiacetoacetat, 1,5-Pentandioldiacetoacetat, Neopentylglykoldiacetoacetat, 1,6-Hexandioldiacetoacetat, Glycerin-diacetoacetat, Glycerin-triacetoacetat, 1,1,1-Trimethylolethan-diacetoacetat, 1,1,1-Trimethylolethan-triacetoacetat, 1,1,1-Trimethylolpropan-diacetoacetat, 1,1,1-Trimethylolpropan-triacetoacetat, dem Triacetoacetat von propoxyliertem und/oder ethoxyliertem 1,1,1-Trimethylolpropan, dem Triacetoacetat von propoxyliertem und/oder ethoxyliertem Glycerin, Poly(oxy-1,2-propylen)diol-bis(acetoacetat), Ethylenoxid-Einheiten enthaltendem Poly(oxy-1,2-propylen)diol-bis(acetoacetat), Rizinusölbis(acetoacetat), Rizinusöl-tris(acetoacetat), Dimerfettsäure-basiertem Polyesterdiol-bis(acetoacetat) und Trimerfettsäure-basiertem Polyestertriol-tris(acetoacetat).

Davon bevorzugt ist 1,2-Propandioldiacetoacetat, Dipropylenglykoldiacetoacetat, Neopentylglykoldiacetoacetat, Glycerin-diacetoacetat, Glycerin-triacetoacetat, 1,1,1-Trimethylolpropan-diacetoacetat, 1,1,1-Trimethylolpropan-triacetoacetat, ein Triacetoacetat von propoxyliertem 1,1,1-Trimethylolpropan mit mittlerem Molekulargewicht Mₙ von 500 bis 1'000 g/mol oder ein Poly(oxy-1,2-propylen)diol-bis-(acetoacetat) mit mittlerem Molekulargewicht Mₙ von 550 bis 5'000 g/mol.

In einer weiteren Ausführungsform der Erfindung steht Y für einen Rest der Formel 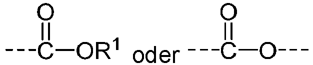 und die aktivierten Methylengruppen der Formel (I) sind somit Malonatgruppen.

Bevorzugt ist eine Verbindung **B** mit Malonatgruppen ausgewählt aus der Liste bestehend aus Malonsäurediethylester, Malonsäurediisopropylester, 1,2-Ethandiol-bis(ethylmalonat), 1,2-Propandiol-bis(ethylmalonat), 1,3-Propandiol-bis(ethylmalonat), 1,4-Butandiol-bis(ethylmalonat), 1,6-Hexandiol-bis(ethylmalonat), 1,4-Cyclohexandimethanol-bis(ethylmalonat), Diethylenglykol-bis(ethylmalonat), Dipropylenglykol-bis(ethylmalonat), Glycerin-tris(ethylmalonat), 1,1,1-Trimethylolpropan-tris(ethylmalonat), Rizinusöl-tris(ethylmalonat), Poly(oxy-1,2-propylen)diol-bis(ethylmalonat) mit mittlerem Molekulargewicht Mₙ von 500 bis 2'000 g/mol, propoxyliertem 1,1,1-Trimethylolpropan mit drei Ethylmalonat-Endgruppen und einem mittleren Molekulargewicht Mₙ von 650 bis 2'500 g/mol, entsprechende oligomere Verbindungen dieser Umsetzungsprodukte, sowie Malonatgruppen enthaltende Polyesterdiole aus der Umsetzung von Diolen wie 1,6-Hexandiol und 1,4-Cyclohexandimethanol mit Malonsäure und Malonsäurediethylester und gegebenenfalls Adipinsäure oder Adipinsäurediethylester.

Geeignete Verbindungen mit Malonatgruppen sind auch kommerziell erhältlich, insbesondere als Acure^{®} 510-200 (von Allnex).

In einer bevorzugten Ausführungsform der Erfindung beträgt die mittlere Funktionalität der gesamten Hauptkomponente in Bezug auf die Reaktivgruppen Aldehyd- und aktivierte Methylengruppen der Formel (I) mindestens 2.2. Das heisst, eine Zusammensetzung mit mittlerer Aldehyd-Funktionalität von beispielsweise 1.8 weist bevorzugt eine mittlere Funktionalität in Bezug auf die aktivierten Methylengruppen der Formel (I) von mindestens 2.4 auf, um insgesamt eine mittlere Reaktivgruppen-Funktionalität von mindestens 2.2 zu erreichen. Eine solche Zusammensetzung ermöglicht eine besonders hohe Festigkeit bei hoher Dehnbarkeit.

Die Hauptkomponente kann zusätzlich weitere Bestandteile enthalten, insbesondere
- Füllstoffe, insbesondere gemahlene oder gefällte Calciumcarbonate, welche gegebenenfalls mit Fettsäuren, insbesondere Stearaten, beschichtet sind, Baryte (Schwerspate), Quarzmehle, Quarzsande, Dolomite, Wollastonite, Kaoline, calcinierte Kaoline, Kieselsäure, Kieselsäure-Kaolinite, calcinierte Kieselsäure-Kaolinite, Schichtsilikate wie Glimmer oder Talk, Zeolithe, Aluminiumhydroxide, Magnesiumhydroxide, hochdisperse Kieselsäuren aus Pyrolyseprozessen, industriell hergestellte Russe, Graphit, Metall-Pulver, beispielsweise von Aluminium, Kupfer, Eisen, Silber oder Stahl, PVC-Pulver oder Hohlkugeln;
- Fasern, insbesondere Glasfasern, Kohlefasern, Metallfasern, Keramikfasern, Hanffasern, Zellulosefasern oder Kunststofffasern wie Polyamidfasern oder Polyethylenfasern;
- Nanofüllstoffe oder Nanofasern wie Graphen oder Carbon Nanotubes;
- Farbstoffe;
- Pigmente, insbesondere Titandioxid, Chromoxid, Eisenoxide oder organische Pigmente;
- Weichmacher, insbesondere Phthalate, insbesondere Diisononylphthalat (DINP), Diisodecylphthalat (DIDP) oder Di(2-propylheptyl)phthalat (DPHP), hydrierte Phthalate, insbesondere Diisononyl-1,2-cyclohexandicarboxylat (DINCH), Terephthalate, insbesondere Bis(2-ethylhexyl)terephthalat oder Diisononylterephthalat (DINT), hydrierte Terephthalate, insbesondere Bis(2-ethylhexyl)-1,4-cyclohexandicarboxylat oder Diisononyl-1,4-cyclohexandicarboxylat, Isophthalate, Trimellitate, Adipate, insbesondere Dioctyladipat (DOA), Azelate, Sebacate, Benzoate, Glycolether, Glycolester, Weichmacher mit Polyetherstruktur, insbesondere Polypropylenoxid-monole, -diole oder -triole, oder Polypropylenoxid-monole, -diole oder -triole mit blockierten Hydroxylgruppen, insbesondere in der Form von Acetatgruppen, sowie organische Sulfonate oder Phosphate, insbesondere Diphenylkresylphosphat (DPK) oder Tris-2-ethyl-hexylphosphat (TOF), Polybutene, Polyisobutene oder von natürlichen Fetten oder Ölen abgeleitete Weichmacher, insbesondere epoxidiertes Soja- oder Leinöl oder Rapsölmethylester, wobei Phthalate, hydrierte Phthalate, Adipate oder Weichmacher mit Polyetherstruktur bevorzugt sind;
- Lösemittel;
- Modifizierungsmittel wie Kohlenwasserstoffharze, natürliche oder synthetische Wachse oder Bitumen;
- Rheologie-Modifizierer, insbesondere Harnstoffverbindungen, Schichtsilikate wie Bentonite, Derivate von Rizinusöl, hydriertes Rizinusöl, Polyamide, Polyurethane, pyrogene Kieselsäuren oder hydrophob modifizierte Polyoxyethylene;
- Trocknungsmittel, insbesondere Molekularsiebe, Calciumoxid, Mono-Oxazolidine wie Incozol^{®} 2 (von Incorez), Orthoester oder Alkoxysilane;
- Haftvermittler, insbesondere Titanate oder Organoalkoxysilane wie Epoxysilane, Mercaptosilane, (Meth)acrylsilane, Carbamatosilane, Alkylsilane, S-(Alkylcarbonyl)mercaptosilane oder oligomere Formen dieser Silane;
- nicht-reaktive thermoplastische Polymere, wie Homo- oder Copolymere von ungesättigten Monomeren, insbesondere aus der Gruppe umfassend Ethylen, Propylen, Butylen, Isobutylen, Isopren, Vinylacetat und Alkyl(meth)acrylate, insbesondere Polyethylene (PE), Polypropylene (PP), Polyisobutylene, Ethylenvinylacetat-Copolymere (EVA) und ataktische Poly-α-Olefine (APAO);
- flammhemmende Substanzen, insbesondere die bereits genannten Füllstoffe Aluminiumhydroxid oder Magnesiumhydroxid, organische Phosphorsäureester, Ammoniumpolyphosphate, Melamin oder Derivate davon, Borverbindungen oder Antimonverbindungen;
- Additive, insbesondere Netzmittel, Verlaufmittel, Entschäumer, Entlüfter, Stabilisatoren gegen Oxidation, Wärme, Licht oder UV-Strahlung oder Biozide;
sowie weitere üblicherweise in härtbaren Zusammensetzungen eingesetzte Substanzen.

Bevorzugt enthält die Hauptkomponente mindestens einen weiteren Bestandteil ausgewählt aus Weichmachern, Füllstoffen und Haftvermittlern. Bevorzugt enthält die Hauptkomponente mehrere solche weitere Bestandteile.

In einer bevorzugten Ausführungsform der Erfindung enthält die Hauptkomponente bezogen auf die gesamte Hauptkomponente 10 bis 95 Gewichts-%, bevorzugt 20 bis 90 Gewichts-%, insbesondere 30 bis 80 Gewichts-%, Füllstoffe. Bevorzugt sind Füllstoffe ausgewählt aus Calciumcarbonaten, beschichteten Calciumcarbonaten, Quarzmehl, Quarzsand, Kaolin, calciniertem Kaolin, Kieselsäure, Kieselsäure-Kaolinit, calciniertem Kieselsäure-Kaolinit, Aluminiumhydroxid, Titandioxid und Russ. Eine solche Zusammensetzung ist besonders geeignet für Anwendungen in Schichtdicken von mindestens 1 mm, bevorzugt 1 bis 50 mm, insbesondere 1.5 bis 25 mm. Dabei zeigt die ausgehärtete Zusammensetzung ausgeprägt elastische Eigenschaften.

In einer weiteren bevorzugten Ausführungsform der Erfindung enthält die Hauptkomponente bezogen auf die gesamte Hauptkomponente 5 bis 80 Gewichts-%, insbesondere 10 bis 60 Gewichts-%, Weichmacher. Bevorzugt sind Weichmacher ausgewählt aus DINP, DIDP, DPHP, DINCH, Bis(2-ethylhexyl)terephthalat, DINT, Bis(2-ethylhexyl)-1,4-cyclohexandicarboxylat, Diisononyl-1,4-cyclohexandicarboxylat, DOA, Polypropylenoxidmonolen, Polypropylenoxiddiolen, Polypropylenoxidtriolen, Polypropylenoxidmonol-acetaten, Polypropylenoxiddioldiacetaten, Polypropylenoxidtrioltriacetaten und DPK.

In einer besonders bevorzugten Ausführungsform der Erfindung enthält die Hauptkomponente Füllstoffe und Weichmacher, insbesondere bezogen auf die gesamte Zusammensetzung 10 bis 95 Gewichts-%, bevorzugt 20 bis 90 Gewichts-%, insbesondere 30 bis 80 Gewichts-%, Füllstoffe und 5 bis 80 Gewichts-%, insbesondere 10 bis 60 Gewichts-%, Weichmacher.

Die Hauptkomponente enthält bezogen auf die gesamte Hauptkomponente bevorzugt weniger als 10 Gewichts-%, besonders bevorzugt weniger als 5 Gewichts-%, insbesondere weniger als 1 Gewichts-%, flüchtige organische Verbindungen (VOC) mit einem Siedepunkt bei Normaldruck von weniger als 250 °C, insbesondere organische Lösemittel. Eine solche Zusammensetzung verursacht besonders wenig Emissionen.

Die Hauptkomponente enthält bevorzugt weniger als 0.5 Gewichts-%, besonders bevorzugt weniger als 0.1 Gewichts-%, insbesondere weniger als 0.05 Gewichts-%, Wasser bezogen auf die gesamte Hauptkomponente. Eine solche Komponente ist besonders lagerstabil.

Bevorzugt umfasst die Hauptkomponente bezogen auf die gesamte Hauptkomponente
- 5 bis 99 Gewichts-%, bevorzugt 5 bis 90 Gewichts-%, insbesondere 10 bis 70 Gewichts-%, der Summe aus Verbindungen **A** und **B**,
- 0 bis 50 Gewichts-%, bevorzugt 10 bis 40 Gewichts-%, Weichmacher,
- 0 bis 90 Gewichts-%, bevorzugt 20 bis 80 Gewichts-%, Füllstoffe,
- und gegebenenfalls weitere Substanzen,

Die Hauptkomponente wird bevorzugt hergestellt, indem die Bestandteile mit einer geeigneten Methode miteinander vermischt werden, so dass eine makroskopisch homogene Masse entsteht. Bevorzugt werden die Füllstoffe in weitgehend trockenem Zustand eingesetzt. Es kann vorteilhaft sein, die Füllstoffe vorgängig mit einer geeigneten Methode zu trocknen, beispielsweise in einem Umluftoften. Die Herstellung erfolgt bevorzugt unter Ausschluss von Feuchtigkeit. Nach der Herstellung wird die vermischte Zusammensetzung in einem geeigneten feuchtigkeitsdichten Gebinde gelagert, insbesondere Fässer, Container, Hobbocks, Eimer, Kanister, Büchsen, Beutel, Schlauchbeutel, Kartuschen oder Tuben. Die feuchtigkeitsdicht verpackte Hauptkomponente ist lagerstabil. Das heisst, sie kann bei Raumtemperatur während längerer Zeit, typischerweise während mindestens 3 Monaten bis zu 6 Monaten und mehr, aufbewahrt werden, ohne dass sie sich in ihren Anwendungs- oder Gebrauchseigenschaften durch die Lagerung in einem für ihren Gebrauch relevanten Ausmass verändert.

Die härtbare Zusammensetzung umfasst weiterhin mindestens eine Beschleunigerkomponente enthaltend mindestens einen Beschleuniger für die Reaktion von Aldehydgruppen mit aktivierten Methylengruppen der Formel (I).

Bevorzugt ist der Beschleuniger für die Reaktion von Aldehydgruppen mit aktivierten Methylengruppen der Formel (I) ein Stickstoff-haltiger Katalysator oder eine wässrige Lösung eines basischen Salzes, insbesondere mit einer Konzentration von 10 bis 30 Gewichts-% des Salzes bezogen auf das Gesamtgewicht der Lösung, oder Wasser.

Besonders bevorzugt ist der Beschleuniger ein Stickstoff-haltiger Katalysator ausgewählt aus sekundären Aminen, tertiären Aminen, Amidinen und Guanidinen, oder ein basisches Salz ausgewählt aus Kaliumacetat, Kaliumbenzoat, Kaliumcarbonat, Kaliumhydrogencarbonat, Kaliumphosphat, Natriumacetat, Natriumbenzoat, Natriumcarbonat, Natriumhydrogencarbonat, Natriumphosphat, Lithiumacetat, Lithiumbenzoat, Lithiumcarbonat, Lithiumhydrogencarbonat und Lithiumphosphat, oder Wasser.

Geeignete sekundäre Amine sind insbesondere Dimethylamin, Diethylamin, Dipropylamin, Diisopropylamin, Dibutylamin, Diisobutylamin, Di-sek.-butylamin, Di(2-ethylhexyl)amin, N-Methylbutylamin, N-Ethylbutylamin, Di(2-methoxyethyl)amin, Diethanolamin, N-Methylethanolamin, N-Ethylethanolamin, N-Methylcyclohexylamin, N-Ethyl-cyclohexylamin, Piperidin, Pyrrolidin, Morpholin, N,N'-Dimethyl-1,3-propandiamin, N,N'-Diethyl-1,3-propandiamin, N,N'-Dibenzyl-1,2-ethandiamin, Piperazin, N-Methylpiperazin, N-Ethylpiperazin, N-Hydroxyethylpiperazin, Imidazolidin, N-Methylimidazolidin, Prolin oder Imidazol.

Geeignete tertiäre Amine sind insbesondere Triethylamin, Tripropylamin, Tributylamin, Tri(2-ethylhexyl)amin, N,N-Dimethylisopropylamin, N-Ethyldiisopropylamin, N,N-Dimethylcyclohexylamin, N,N-Dimethyl-C₁₂₋₁₄-alkylamin, N,N-Dimethylbenzylamin, α-Methylbenzyldimethylamin, Tetramethyl-1,2-ethandiamin, Tetramethyl-1,6-hexandiamin, Pentamethyldiethylentriamin, Tris(3-dimethylaminopropyl)amin, Triethanolamin, Triisopropanolamin, N,N-Dimethylethanolamin, N,N-Diethylethanolamin, N,N-Dibutylethanolamin, N,N-Dimethyl-1,3-propanolamin, N-Methyldiethanolamin, N-Methylpiperidin, N,N'-Dimethylpiperazin, N-Methyl-N'-dimethyl-aminoethylpiperazin, Bis(dimethylaminoethyl)piperazin, 1,4-Diazabicyclo[2.2.2]-octan (DABCO), 1,3,5-Trimethylhexahydrotriazin, 1,3,5-Tris(dimethylaminopropyl)hexahydrotriazin, 1,3-Bis(dimethylaminopropyl)harnstoff, Bis(2-dimethylaminoethyl)ether, Tris(2-(2-methoxyethoxy)ethyl)amin, 2,2'-Dimorpholinodiethylether (DMDEE), N-Methylimidazol, N-Vinylimidazol oder 1,2-Dimethylimidazol.

Geeignete Amidine oder Guanidine sind insbesondere 1,8-Diazabicyclo[5.4.0]-undec-7-en (DBU), 1,5-Diazabicyclo[4.3.0]non-5-en (DBN), 1-(2-Hydroxy-3-(3-trimethoxysilylpropoxy)prop-1-yl)-2-methyl-1,4,5,6-tetrahydropyrimidin, 2-Imidazolin, 2-Methylimidazolin, 2-Ethylimidazolin, 2-Phenylimidazolin, 1,1,3,3-Tetramethylguanidin, 1-Hexyl-2,3-diisopropylguanidin oder 1,1'-( α,ω-Polyoxypropylen)bis(2,3-diisopropylguanidin) mit mittlerem Molekulargewicht Mₙ von 250 bis 500 g/mol.

Im Fall von Cyanoacetatgruppen als aktivierte Methylengruppen der Formel (I) bevorzugte Beschleuniger sind tertiäre Amine oder basische Salze wie insbesondere Kaliumacetat, Kaliumcarbonat, Kaliumphosphat, Natriumacetat, Natriumcarbonat oder Natriumphosphat, oder Wasser

Im Fall von aktivierten Methylengruppen der Formel (I) mit 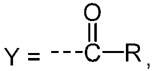 insbesondere Acetoacetatgruppen, bevorzugte Beschleuniger sind sekundäre Amine, Amidine oder Guanidine.

Besonders bevorzugt ist Morpholin. Damit wird eine besonders hohe Dehnung und/oder ein besonders hoher Weiterreisswiderstand erhalten.

Zusätzlich enthält die Beschleunigerkomponente bevorzugt einen Weichmacher und gegebenenfalls einen Füllstoff, sowie gegebenenfalls etwas Wasser.

Das Vermischen der Haupt- und der Beschleunigerkomponente erfolgt mittels eines geeigneten Verfahrens, insbesondere mittels Statikmischer oder einem dynamischen Mischer. Das Vermischen kann kontinuierlich oder batchweise erfolgen.

Werden die Komponenten vor der Applikation miteinander vermischt, so muss darauf geachtet werden, dass zwischen dem Vermischen der Komponenten und der Applikation nicht zu viel Zeit vergeht, da es sonst durch die einsetzende Reaktion und den damit verbundenen Anstieg der Viskosität zu Störungen wie beispielsweise einem ungenügenden Verlauf oder einer verlangsamten oder unvollständigen Haftungsaufbau zum Substrat kommen kann. Insbesondere soll die Offenzeit der Zusammensetzung während der Applikation nicht überschritten werden.

Als "Offenzeit" wird dabei die Zeitspanne zwischen dem Vermischen der Komponenten und dem Ende eines für die Verarbeitung geeigneten Zustands der Zusammensetzung bezeichnet. Die Offenzeit kann auch als "Verarbeitungszeit" bezeichnet werden. Die Zeit bis zur Ausbildung einer klebfreien Oberfläche ("tackfree time") stellt dabei ein Mass für die Offenzeit dar.

Bevorzugt liegt das Mischungsverhältnis zwischen der Hauptkomponente und der Beschleunigerkomponente in Gewichtsteilen im Bereich von 100/0.1 bis 100/10, insbesondere 100/0.5 bis 100/5.

Ein solches asymmetrisches Mischungsverhältnis erlaubt das Einmischen der Beschleunigerkomponente über einen auf die verpackte Hauptkomponente aufgeschraubten Dosieraufsatz, beispielsweise vom Typ SikaBooster^{®}. Dabei wird die im Dosieraufsatz enthaltene Beschleunigerkomponente bei der Applikation durch einen Drehmechanismus aus dem Dosieraufsatz gefördert und durch einen kurzen Statikmischer mit der Hauptkomponente vermischt, wodurch schliesslich die vermischte härtbare Zusammensetzung appliziert wird.

Ein weiterer Gegenstand der Erfindung ist ein Verfahren zum Aushärten der härtbaren Zusammensetzung, wobei die Hauptkomponente und die Beschleunigerkomponente miteinander vermischt werden und die vermischte Zusammensetzung auf mindestens ein Substrat appliziert wird und aushärtet.

Bevorzugt erfolgt die Aushärtung bei Umgebungsbedingungen, insbesondere bei einer Temperatur im Bereich von - 5 bis 50 °C, bevorzugt 0 bis 40 °C, insbesondere 5 bis 35 °C.

In der vermischten Zusammensetzung ermöglicht der Beschleuniger die Reaktion der aktivierten Methylengruppen der Formel (I) mit den Aldehydgruppen, wodurch die Zusammensetzung schnell, zuverlässig und störungsfrei zu einem festen, polymeren Material aushärtet.

Geeignete Substrate, auf welche die vermischte härtbare Zusammensetzung appliziert wird, sind insbesondere
- Glas, Glaskeramik, Beton, Mörtel, Zementestrich, Faserzement, Backstein, Ziegel, Gips oder Natursteine wie Granit oder Marmor;
- Reparatur- oder Nivelliermassen auf Basis PCC (Polymer-modifizierter Zementmörtel) oder ECC (Epoxidharz-modifizierter Zementmörtel);
- Metalle oder Legierungen wie Aluminium, Eisen, Stahl, Kupfer, weitere Buntmetalle, inklusive oberflächenveredelte Metalle oder Legierungen wie verzinkte oder verchromte Metalle;
- Asphalt oder Bitumen;
- Leder, Textilien, Papier, Holz, mit Harzen, beispielsweise Phenol-, Melamin- oder Epoxidharzen, gebundene Holzwerkstoffe, Harz-Textil-Verbundwerkstoffe oder weitere sogenannte Polymer-Composites;
- Kunststoffe wie Hart- und Weich-PVC, Polycarbonat, Polystyrol, Polyester, Polyamid, PMMA, ABS, SAN, Epoxidharze, Phenolharze, PUR, POM, TPO, PE, PP, EPM oder EPDM, jeweils unbehandelt oder oberflächenbehandelt, beispielsweise mittels Plasma, Corona oder Flammen;
- Faserverstärkte Kunststoffe, wie Kohlefaser-verstärkte Kunststoffe (CFK), Glasfaser-verstärkte Kunststoffe (GFK), Naturfaser-verstärkte Kunststoffe (NFK) und Sheet Moulding Compounds (SMC);
- Isoliermaterialen, insbesondere Schäume, insbesondere aus EPS, XPS, PUR, PIR, Aerogel oder geschäumtes Glas (Foamglas), oder Fasern aus Steinwolle oder Glaswolle,
- beschichtete oder lackierte Substrate, insbesondere lackierte Fliesen, gestrichener Beton, pulverbeschichtete Metalle oder Legierungen oder lackierte Bleche;
- Beschichtungen, Farben oder Lacke.

Die Substrate können bei Bedarf vor dem Applizieren vorbehandelt werden, insbesondere durch physikalische und/oder chemische Reinigungsverfahren oder das Aufbringen eines Aktivators oder eines Primers.

Verklebt und/oder abgedichtet werden können zwei gleichartige oder zwei verschiedene Substrate.

Ein weiterer Gegenstand der Erfindung ist die ausgehärtete Zusammensetzung erhalten aus dem Verfahren zum Aushärten der härtbaren Zusammensetzung, wobei die Hauptkomponente und die Beschleunigerkomponente miteinander vermischt werden und die vermischte Zusammensetzung auf mindestens ein Substrat appliziert wird.

Bevorzugt ist die ausgehärtete Zusammensetzung elastisch und weist eine hohe Festigkeit bei hoher Dehnbarkeit und hohem Weiterreisswiderstand auf. Bevorzugt weist die ausgehärtete Zusammensetzung eine Bruchdehnung von mindestens 50 %, bevorzugt mindestens 100 %, insbesondere mindestens 150 %, auf, bestimmt gemäss DIN EN 53504 bei einer Zuggeschwindigkeit von 200 mm/min an hantelförmigen Prüfkörpern (Dicke 2 mm, Länge 75 mm, Steglänge 30 mm, Stegbreite 4 mm).

Bevorzugt weist die ausgehärtete Zusammensetzung eine Zugfestigkeit von mindestens 1 MPa, bevorzugt mindestens 1.5 MPa, mehr bevorzugt mindestens 2 MPa, mehr bevorzugt mindestens 2.5 MPa, insbesondere mindestens 3 MPa, auf, bestimmt gemäss DIN EN 53504 bei einer Zuggeschwindigkeit von 200 mm/min an hantelförmigen Prüfkörpern (Dicke 2 mm, Länge 75 mm, Steglänge 30 mm, Stegbreite 4 mm).

Weiterhin verfügt die ausgehärtete Zusammensetzung über eine gute Beständigkeit gegen Hitze und Wasser. Bevorzugt zeigt die ausgehärtete Zusammensetzung auch nach einer Lagerung während 7 Tagen bei 100 °C oder bei 70 °C und 100 % relativer Feuchtigkeit eine hohe Festigkeit und Dehnbarkeit.

Die beschriebene Zusammensetzung eignet sich für eine Vielzahl von Verwendungen. Sie kann verwendet werden als Klebstoff, Dichtstoff, Beschichtung, Giessharz oder Spachtelmasse, insbesondere als elastischer Klebstoff, elastischer Dichtstoff oder elastische Beschichtung.

Ein weiterer Gegenstand der Erfindung ist die Verwendung der härtbaren Zusammensetzung als elastischer Klebstoff, elastischer Dichtstoff oder elastische Beschichtung.

Aus der Verwendung der härtbaren Zusammensetzung wird ein Artikel erhalten. Der Artikel ist insbesondere mit der Zusammensetzung verklebt, abgedichtet oder beschichtet. Dieser Artikel kann ein Bauwerk oder ein Teil davon sein, insbesondere ein Bauwerk des Hoch- oder Tiefbaus, eine Brücke, ein Dach, ein Treppenhaus oder eine Fassade, oder er kann ein industrielles Gut oder ein Konsumgut oder ein Anbauteil davon sein, insbesondere ein Fenster, ein Rohr, ein Rotorblatt einer Windkraftanlage, eine Haushaltmaschine oder ein Verkehrsmittel wie insbesondere ein Automobil, ein Bus, ein Lastkraftwagen, ein Schienenfahrzeug, ein Schiff, ein Flugzeug oder ein Helikopter.

### Beispiele

Im Folgenden sind Ausführungsbeispiele aufgeführt, welche die beschriebene Erfindung näher erläutern sollen. Selbstverständlich ist die Erfindung nicht auf diese beschriebenen Ausführungsbeispiele beschränkt.

Als "Normklima" ("NK") wird eine Temperatur von 23±1°C und eine relative Luftfeuchtigkeit von 50±5% bezeichnet.

Die verwendeten Chemikalien waren, sofern nicht anders bezeichnet, von Merck.

### Beschreibung der Messmethoden:

Die **Viskosität** wurde auf einem thermostatisierten Kegel-Platte-Viskosimeter Rheotec RC30 (Kegeldurchmesser 10 mm, Kegelwinkel 1°, Kegelspitze-Platte-Abstand 0.05 mm, Scherrate 10 s⁻¹) gemessen.

**Infrarotspektren** (FT-IR) wurden als unverdünnte Filme auf einem mit horizontaler ATR-Messeinheit mit Diamant-Kristall ausgestatteten FT-IR Gerät Nicolet iS5 von Thermo Scientific gemessen. Die Absorptionsbanden sind in Wellenzahlen (cm⁻¹) angegeben.

Der **Gehalt an monomerem Diisocyanat** wurde mittels HPLC (Detektion über Photodiodenarray; 0.04 M Natriumacetat / Acetonitril als mobile Phase) nach vorgäniger Derivation mittels N-Propyl-4-nitrobenzylamin bestimmt.

### Herstellung von Polymeren mit Aldehydgruppen:

### Polymer A-1:

500 g des Isocyanatgruppen-haltigen **Polymer-1** (NCO-Gehalt 1.84 Gewichts-%, Basis IPDI, hergestellt wie nachfolgend beschrieben) wurde in Gegenwart von 0.1 g Dibutylzinndilaurat unter Ausschluss von Feuchtigkeit bei 110 °C mit 27.7 g 5-Hydroxymethylfurfural umgesetzt, bis mittels IR-Spektroskopie keine Isocyanatgruppen mehr nachweisbar waren. Erhalten wurde eine klare, farblose Flüssigkeit mit einer Viskosität von 63.7 Pa s bei 20 °C, einer mittleren Aldehyd-Funktionalität von ca. 2.3 und einem theoretischen Aldehyd-Equivalentgewicht von 2381 g/eq. Das mittlere Molekulargewicht Mₙ betrug 6'100 g/mol, bestimmt mittels Gelpermeationschromatographie (GPC) gegen Polystyrol (474 bis 2'520'000 g/mol) als Standard, mit Tetrahydrofuran als mobile Phase und Brechungsindex-Detektor.

### Polymer A-2:

500 g des Isocyanatgruppen-haltigen **Polymer-2** (NCO-Gehalt 1.68 Gewichts-%, Basis MDI, hergestellt wie nachfolgend beschrieben) wurde unter Ausschluss von Feuchtigkeit bei 80 °C mit 25.5 g 5-Hydroxymethylfurfural umgesetzt, bis mittels IR-Spektroskopie keine Isocyanatgruppen mehr nachweisbar waren. Erhalten wurde eine klare, farblose Flüssigkeit mit einer Viskosität von 187.1 Pa s bei 20 °C, einer mittleren Aldehyd-Funktionalität von ca. 2.3 und einem theoretischen Aldehyd-Equivalentgewicht von 2632 g/eq.

Das Isocyanatgruppen-haltige **Polymer-1** wurde hergestellt, indem 780 g Ethylenoxid-terminiertes Polyoxypropylentriol (Desmophen^{®} 5031 BT, OH-Zahl 28.0 mg KOH/g, OH-Funktionalität ca. 2.3, von Covestro) mit 303 g Isophorondiisocyanat (Vestanat^{®} IPDI, von Evonik) bei 80 °C nach bekanntem Verfahren zu einer Reaktionsmischung mit einem NCO-Gehalt von 9.1 Gewichts-% umgesetzt wurden und anschliessend die flüchtigen Bestandteile, insbesondere nicht umgesetztes Isophorondiisocyanat, in einem Kurzwegverdampfer destillativ entfernt wurden (Manteltemperatur 160 °C, Druck 0.1 bis 0.005 mbar), wobei ein Polymer mit einem NCO-Gehalt von 1.84 Gewichts-% und einem Gehalt an monomerem Isophorondiisocyanat von 0.02 Gewichts-% erhalten wurde.

Das Isocyanatgruppen-haltige **Polymer-2** wurde hergestellt, indem 725 g Ethylenoxid-terminiertes Polyoxypropylentriol (Desmophen^{®} 5031 BT, OH-Zahl 28.0 mg KOH/g, OH-Funktionalität ca. 2.3, von Covestro) mit 275 g 4,4'-Diphenylmethandiisocyanat (Desmodur^{®} 44 MC L, von Covestro) bei 80 °C nach bekanntem Verfahren zu einer Reaktionsmischung mit einem NCO-Gehalt von 7.6 Gewichts-% umgesetzt wurden und anschliessend die flüchtigen Bestandteile, insbesondere nicht umgesetztes 4,4'-Diphenylmethandiisocyanat, in einem Kurzwegverdampfer destillativ entfernt wurden (Manteltemperatur 180 °C, Druck 0.1 bis 0.005 mbar), wobei ein Polymer mit einem NCO-Gehalt von 1.68 Gewichts-% und einem Gehalt an monomerem 4,4'-Diphenylmethandiisocyanat von 0.04 Gewichts-% erhalten wurde.

### Herstellung von Verbindungen mit aktivierten Methylengruppen:

### Verbindung B-1:

154.2 g (1.5 mol OH) propoxyliertes 1,1,1-Trimethylolpropan (Desmophen^{®} 4011 T, OH-Zahl 550 mg KOH/g, von Covestro) wurden mit 201.7 g (1.55 mol) Ethylacetoacetat und 0.4 g Tetra-n-butyltitanat (Tyzor^{®} TnBT, von Dorf Ketal) versetzt und bei einer Temperatur von 80 bis 140 °C unter Vakuum umgesetzt, bis im FT-IR die breite OH-Bande im Bereich von 3'300 bis 3'600 cm⁻¹ verschwunden war und keine flüchtigen Stoffe mehr abgeschieden wurden. Erhalten wurden 265.1 g einer klaren, gelblichen Flüssigkeit mit einer Viskosität von 0.8 Pa s bei 20 °C, einer mittleren Acetoacetat-Funktionalität von ca. 3 und einem theoretischen Acetoacetat-Equivalentgewicht von 186 g/eq.

### Verbindung B-2:

555.2 g (5.4 mol OH) propoxyliertes 1,1,1-Trimethylolpropan (Desmophen^{®} 4011 T, OH-Zahl 550 mg KOH/g, von Covestro) wurden mit 633.5 g (5.6 mol) Ethylcyanoacetat und 1.2 g Tetra-n-butyltitanat (Tyzor^{®} TnBT, von Dorf Ketal) versetzt und bei einer Temperatur von 80 bis 140 °C unter Vakuum umgesetzt, bis im FT-IR die breite OH-Bande im Bereich von 3'300 bis 3'600 cm-' verschwunden war und keine flüchtigen Stoffe mehr abgeschieden wurden. Erhalten wurden 866.2 g einer klaren, gelblichen Flüssigkeit mit einer Viskosität von 1.72 Pa s bei 20 °C, einer mittleren Cyanoacetat-Funktionalität von ca. 3 und einem theoretischen Cyanoacetat-Equivalentgewicht von 169 g/eq.

### Herstellung von Hauptkomponenten:

### verwendete Substanzen:

| | |
|---|---|
| Weichmacher-1: | n-Butanol-gestartetes acetyliertes PPG-Monol, hergestellt aus der Umsetzung von Synalox^{®} 100-20B (mittleres Molekulargewicht Mₙ ca. 750 g/mol, vonDow) und Essigsäureanhydrid unter destillativer Enfernung von Essigsäure |
| Kaolin calciniert: | Satintone^{®} W (von HM Royal) |
| Russ: | Monarch^{®} 570 (von Cabot) |
| Molekularsieb: | Sylosiv^{®} A 3 (von Grace) |
| Epoxysilan: | 3-Glycidoxypropyltrimethoxysilan |

### Hauptkomponente K1 bis K4:

Für jede Zusammensetzung wurden die in Tabelle 1 angegebenen Inhaltsstoffe in den angegebenen Mengen (in Gewichtsteilen) mittels eines Zentrifugalmischers (Thinky ARE-250) miteinander vermischt, zu einer makroskopisch homogenen Paste verarbeitet und die vermischte Zusammensetzung bzw. Komponente in einem feuchtigkeitsdichten Gebinde aufbewahrt. Das Molekularsieb, der Russ und das Kaolin wurden vorgängig in einem Umluftofen bei 130 °C getrocknet.

Die **Lagerstabilität** der Hauptkomponenten wurde bestimmt, indem jeweils die Viskosität nach einer Lagerzeit im verschlossenen Gebinde von 1d im Normklima (NK) und nach 7d in einem Umluftofen bei 40 °C gemessen wurde. Ein geringer Anstieg der Viskosität nach 7d bei 40 °C im Vergleich zu 1d NK zeigt eine besonders gute Lagerstabilität. Eine nicht-lagerstabile Hauptkomponente ist nach Aufbewahrung während 7d bei 40 °C im verschlossenen Gebinde ausgehärtet.

**Tabelle 1: Zusammensetzung und Lagerstabilität der Zusammensetzungen K1 bis K4.**

| **Zusammensetzung** | | **K1** | **K2** | **K3** | **K4** |
|---|---|---|---|---|---|
| Polymer **A-1** | | 90.0 | 90.0 | 90.0 | 90.0 |
| Verbindung **B-1** | | 8.2 | 10.3 | 12.0 | - |
| Verbindung **B-2** | | - | - | - | 7.0 |
| Weichmacher-1 | | 60.0 | 60.0 | 60.0 | 60.0 |
| Kaolin calciniert | | 110.0 | 110.0 | 110.0 | 100.0 |
| Russ | | 40.0 | 40.0 | 40.0 | 40.0 |
| Molekularsieb | | - | - | - | 12.0 |
| Epoxysilan | | 2.0 | 2.0 | 2.0 | 2.0 |
| Verhältnis (I) / Ald.¹ | | 1.2 | 1.5 | 1.7 | 1.1 |
| Viskosität (20°C) | | | | | |
| [Pa·s] | 1d NK | 555 | 532 | 521 | 533 |
| | 7d 40 °C | 686 | 655 | 640 | 700 |

| | | | | | |
|---|---|---|---|---|---|
| ¹ Verhältnis der Anzahl aktivierte Methylengruppen der Formel (I) zur Anzahl Aldehydgruppen | | | | | |

Herstellung von härtbaren Zusammensetzungen mit Beschleunigerkomponente-.

### Zusammensetzungen Z1 bis Z11:

Für jede Zusammensetzung wurde die in den Tabellen 2 bis 3 angegebene Hauptkomponente in der angegebenen Menge (in Gewichtsteilen) mittels des Zentrifugalmischers mit der in den Tabellen 2 bis 3 angegebenen Beschleunigerkomponente in der angegebenen Menge vermischt und die vermischte Zusammensetzung unmittelbar danach folgendermassen geprüft:
Die Zeit bis zur Klebefreiheit (**Tack Free Time** oder abgekürzt **TFT**) wurde bestimmt, indem 20 g der vermischten Zusammensetzung in einer Schichtdicke von ca. 2 mm auf Pappkarton aufgetragen und im Normklima die Zeitdauer bestimmt wurde, bis beim leichten Antippen der Oberfläche der applizierten Zusammensetzung mittels einer Pipette aus LDPE erstmals keine Rückstände auf der Pipette mehr zurückblieben.

Zur Bestimmung der mechanischen Eigenschaften wurde die vermischte Zusammensetzung auf einem silikonbeschichteten Trennpapier zu einem Film von 2 mm Dicke aufgebracht, dieser während 7 Tagen im Normklima aushärten lassen, einige hantelförmige Prüfkörper mit einer Länge von 75 mm bei einer Steglänge von 30 mm und einer Stegbreite von 4 mm aus dem Film ausgestanzt und diese gemäss DIN EN 53504 bei einer Zuggeschwindigkeit von 200 mm/min auf **Zugfestigkeit**, **Bruchdehnung** und **E-Modul 5%** (bei 0.5-5% Dehnung) geprüft. Weiter wurden einige Prüfkörper zur Bestimmung des **Weiterreisswiderstands** ausgestanzt und gemäss DIN ISO 34-1, Verfahren B (winkelförmiger Prüfkörper) bei einer Zuggeschwindigkeit von 500 mm/min geprüft.

Die **Shore A** Härte wurde nach DIN 53505 an während 7 Tagen im Normklima gehärteten Prüfkörpern (Durchmesser 20 mm, Dicke 5 mm) bestimmt. Diese Resultate sind mit dem Zusatz **"7d NK"** versehen. Zur Bestimmung der Beständigkeit gegen Hitze und Wasser wurden weitere Shore A-Prüfkörper nach 7 Tagen Aushärtung im Normklima entweder zusätzlich während 7 Tagen in einem Umluftofen bei 100 °C gelagert oder zusätzlich während 7 Tagen bei 70 °C und 100 % relativer Feuchtigkeit gelagert und nach Abkühlen auf Raumtemperatur die Shore A-Härte bestimmt. Diese Resultate sind mit dem Zusatz "**+7d 100°C**" bzw. "**+7d 70/100"** versehen.

Die Resultate sind in den Tabellen 2 bis 3 angegeben.

**Tabelle 2: Zusammensetzungen Z1 bis Z8.**

| **Zusammensetzung** | | | **Z1** | **Z2** | **Z3** | **Z4** | **Z5** | **Z6** | **Z7** | **Z8** |
|---|---|---|---|---|---|---|---|---|---|---|
| Zusammensetzung **K1** | | | 100 | 100 | 100 | - | - | - | - | - |
| Zusammensetzung **K2** | | | - | - | - | 100 | 100 | 100 | - | - |
| Zusammensetzung **K3** | | | - | - | - | - | - | - | 100 | 100 |
| Beschleuniger: | | | | | | | | | | |
| | DBU ¹ | | 0.5 | - | - | 0.5 | - | - | 0.5 | - |
| | Morpholin | | - | 1.0 | - | - | 1.0 | - | - | 1.0 |
| | Piperidin | | - | - | 1.0 | - | - | 1.0 | - | - |
| TFT [h:min] | | | 0:26 | 1:55 | 0:15 | 0:27 | 2:02 | 0:16 | 0:15 | 2:40 |
| Zugfestigkeit | | [MPa] | 4.2 | 6.7 | 4.0 | 6.35 | 7.6 | 4.9 | 4.9 | 8.0 |
| Bruchdehnung | | [%] | 47 | 109 | 65 | 54 | 101 | 56 | 37 | 97 |
| E-Modul 5% | | [MPa] | 7.0 | 4.8 | 6.1 | 8.4 | 6.1 | 7.8 | 9.4 | 6.3 |
| Weiterreisswiderstand [N/mm] | | | 3.2 | 4.7 | 4.8 | 3.8 | 4.9 | 4.8 | 3.4 | 4.8 |
| Shore A | | (7d NK) | 71 | 65 | 63 | 76 | 68 | 65 | 76 | 69 |
| (+ 7d 100°C) | | | 76 | 76 | 78 | 79 | 73 | 76 | 77 | 73 |
| (+ 7d 70/100) | | | 69 | 62 | 61 | 71 | 66 | 68 | 67 | 67 |

| | | | | | | | | | | |
|---|---|---|---|---|---|---|---|---|---|---|
| ¹ 1,8-Diazabicyclo[5.4.0]undec-7-en (Lupragen^{®} N700, von BASF) | | | | | | | | | | |

**Tabelle 3: Zusammensetzungen Z9 bis Z11.**

| **Zusammensetzung** | | **Z9** | **Z10** | **Z11** |
|---|---|---|---|---|
| Zusammensetzung **K4** | | 100 | 100 | 100 |
| Beschleuniger | | DAEE ¹ | K₃PO₄ ² | H₂O |
| | | 0.2 | 0.4 | 3.8 |
| HBZ [h:min] | | 0:05 | 0:35 | 2:10 |
| Zugfestigkeit | [MPa] | 7.9 | 7.2 | 5.8 |
| Bruchdehnung | [%] | 132 | 164 | 150 |
| E-Modul 5% | [MPa] | 4.5 | 4.2 | 4.5 |
| Weiterreisswiderstand [N/mm] | | 5.6 | 6.9 | 8.4 |
| Shore A | (7d NK) | 65 | 62 | 58 |
| | (+ 7d 100°C) | 70 | 67 | 66 |
| | (+ 7d 70/100) | 59 | 54 | 55 |

| | | | | |
|---|---|---|---|---|
| ¹ Bis(2-dimethylaminoethyl)ether ² 25 Gewichts-% in Wasser | | | | |

## Patentansprüche

1. Härtbare Zusammensetzung umfassend
(i) eine Hauptkomponente enthaltend
- mindestens eine Verbindung **A** mit Aldehydgruppen, und
- mindestens eine Verbindung **B** mit aktivierten Methylengruppen der Formel (I), 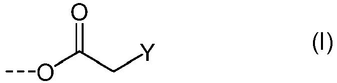 wobei Y für einen Rest der Formel ---CN , 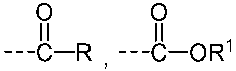 oder 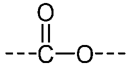 steht, R für einen einwertigen Kohlenwasserstoffrest mit 1 bis 10 C-Atomen steht und R¹ für einen Alkylrest mit 1 bis 6 C-Atomen steht,
und
(ii) eine Beschleunigerkomponente enthaltend mindestens einen Beschleuniger für die Reaktion von Aldehydgruppen mit aktivierten Methylengruppen der Formel (I),
wobei mindestens eine der beiden Verbindungen **A** und **B** ein Polymer mit einem mittleren Molekulargewicht Mₙ von 500 bis 20'000 g/mol ist, gemessen mittels Gelpermeationschromatographie (GPC) gegen Polystyrol als Standard.

2. Härtbare Zusammensetzung gemäss Anspruch 1, **dadurch gekennzeichnet, dass** die Verbindung **A** ein Polymer mit einem mittleren Molekulargewicht Mₙ von 500 bis 20'000 g/mol, besonders bevorzugt 1'000 bis 15'000 g/mol, insbesondere 2'000 bis 10'000 g/mol, und einer mittleren Aldehyd-Funktionalität von 1.6 bis 4.0, bevorzugt 1.8 bis 3.5, besonders bevorzugt 2.0 bis 3.0, insbesondere 2.2 bis 3.0, ist.

3. Härtbare Zusammensetzung gemäss einem der Ansprüche 1 bis 2, **dadurch gekennzeichnet, dass** die Verbindung **B** in Bezug auf die aktivierten Methylengruppen der Formel (I) ein Equivalentgewicht, oder im Fall einer oligomeren oder polymeren Verbindung **B** mittleres Equivalentgewicht, von 100 bis 2'100 g/eq, bevorzugt 114 bis 600 g/eq, insbesondere 114 bis 400 g, und eine Funktionalität, oder im Fall einer oligomeren oder polymeren Verbindung **B** mittlere Funktionalität, von 1.5 bis 4, bevorzugt 1.8 bis 3.5, mehr bevorzugt 2 bis 3, insbesondere 2.3 bis 3, aufweist.

4. Härtbare Zusammensetzung gemäss einem der Ansprüche 1 bis 3, **dadurch gekennzeichnet, dass** das Verhältnis der Anzahl aktivierte Methylengruppen der Formel (I) zur Anzahl Aldehydgruppen in der gesamten Zusammensetzung im Bereich von 0.7 bis 3.0, besonders bevorzugt 0.9 bis 2.5, insbesondere 0.9 bis 2.0, liegt.

5. Härtbare Zusammensetzung gemäss einem der Ansprüche 1 bis 4, **dadurch gekennzeichnet, dass** Y für ---CN steht und die aktivierten Methylengruppen der Formel (I) somit Cyanoacetatgruppen sind, wobei die Verbindung **B** mit Cyanoacetatgruppen insbesondere ein Polymer mit einem mittleren Molekulargewicht Mₙ von 500 bis 6'000 g/mol, besonders bevorzugt 500 bis 2'000 g/mol, insbesondere 500 bis 1'000 g/mol, und einer mittleren Cyanoacetat-Funktionalität von 1.5 bis 4, bevorzugt 1.8 bis 3.5, mehr bevorzugt 2 bis 3, insbesondere 2.3 bis 3, ist, insbesondere ausgewählt aus der Liste bestehend aus dem Tricyanoacetat von ethoxyliertem und/oder propoxyliertem 1,1,1-Trimethylolpropan, dem Tricyanoacetat von ethoxyliertem und/oder propoxyliertem Glycerin, Poly(oxy-1,2-propylen)diol-bis(cyanoacetat), Ethylenoxid-Einheiten enthaltendem Poly(oxy-1,2-propylen)diol-bis(cyanoacetat), Dimerfettsäure-basiertem Polyesterdiol-bis(cyanoacetat) und Trimerfettsäure-basiertem Polyestertriol-tris(cyanoacetat).

6. Härtbare Zusammensetzung gemäss einem der Ansprüche 1 bis 4, **dadurch gekennzeichnet, dass** Y für 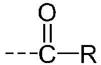 steht, wobei R insbesondere für Methyl steht und die aktivierten Methylengruppen der Formel (I) somit Acetoacetatgruppen sind.

7. Härtbare Zusammensetzung gemäss Anspruch 6, **dadurch gekennzeichnet, dass** die Verbindung **B** ausgewählt ist aus der Liste bestehend aus 1,2-Propandioldiacetoacetat, Dipropylenglykoldiacetoacetat, Tripropylenglykoldiacetoacetat, 1,3-Propandioldiacetoacetat, 1,4-Butandioldiacetoacetat, 2-Methyl-1,3-propandioldiacetoacetat, 1,5-Pentandioldiacetoacetat, Neopentylglykoldiacetoacetat, 1,6-Hexandioldiacetoacetat, Glycerin-diacetoacetat, Glycerin-triacetoacetat, 1,1,1-Trimethylolethan-diacetoacetat, 1,1,1-Trimethylolethan-triacetoacetat, 1,1,1-Trimethylolpropan-diacetoacetat, 1,1,1-Trimethylolpropan-triacetoacetat, dem Triacetoacetat von propoxyliertem und/oder ethoxyliertem 1,1,1-Trimethylolpropan, dem Triacetoacetat von propoxyliertem und/oder ethoxyliertem Glycerin, Poly(oxy-1,2-propylen)diol-bis(acetoacetat), Ethylenoxid-Einheiten enthaltendem Poly(oxy-1,2-propylen)diol-bis(acetoacetat), Rizinusöl-bis(acetoacetat), Rizinusöl-tris(acetoacetat), Dimerfettsäure-basiertem Polyesterdiol-bis(acetoacetat) und Trimerfettsäure-basiertem Polyestertriol-tris(acetoacetat).

8. Härtbare Zusammensetzung gemäss einem der Ansprüche 1 bis 7, **dadurch gekennzeichnet, dass** die mittlere Funktionalität der gesamten Zusammensetzung in Bezug auf die Reaktivgruppen Aldehyd- und aktivierte Methylengruppen der Formel (I) mindestens 2.2 beträgt.

9. Härtbare Zusammensetzung gemäss einem der Ansprüche 1 bis 8, **dadurch gekennzeichnet, dass** die Hauptkomponente mindestens einen weiteren Bestandteil ausgewählt aus Weichmachern, Füllstoffen und Haftvermittlern enthält.

10. Härtbare Zusammensetzung gemäss einem der Ansprüche 1 bis 9, **dadurch gekennzeichnet, dass** der Beschleuniger für die Reaktion von Aldehydgruppen mit aktivierten Methylengruppen der Formel (I) ein Stickstoff-haltiger Katalysator oder eine wässrige Lösung eines basischen Salzes, insbesondere mit einer Konzentration von 10 bis 30 Gewichts-% des Salzes bezogen auf das Gesamtgewicht der Lösung, oder Wasser ist.

11. Härtbare Zusammensetzung gemäss Anspruch 10, **dadurch gekennzeichnet, dass** der Beschleuniger ein Stickstoff-haltiger Katalysator ausgewählt aus sekundären Aminen, tertiären Aminen, Amidinen und Guanidinen, oder ein basisches Salz ausgewählt aus Kaliumacetat, Kaliumbenzoat, Kaliumcarbonat, Kaliumhydrogencarbonat, Kaliumphosphat, Natriumacetat, Natriumbenzoat, Natriumcarbonat, Natriumhydrogencarbonat, Natriumphosphat, Lithiumacetat, Lithiumbenzoat, Lithiumcarbonat, Lithiumhydrogencarbonat und Lithiumphosphat, oder Wasser ist.

12. Härtbare Zusammensetzung gemäss einem der Ansprüche 1 bis 11, **dadurch gekennzeichnet, dass** das Mischungsverhältnis zwischen der Hauptkomponente und der Beschleunigerkomponente in Gewichtsteilen im Bereich von 100/0.1 bis 100/10, insbesondere 100/0.5 bis 100/5, liegt.

13. Verfahren zum Aushärten der härtbaren Zusammensetzung gemäss einem der Ansprüche 1 bis 12, **dadurch gekennzeichnet, dass** die Hauptkomponente und die Beschleunigerkomponente miteinander vermischt werden und die vermischte Zusammensetzung auf mindestens ein Substrat appliziert wird und aushärtet.

14. Ausgehärtete Zusammensetzung erhalten aus dem Verfahren gemäss Anspruch 13, wobei die ausgehärtete Zusammensetzung insbesondere elastisch ist und insbesondere eine Bruchdehnung von mindestens 50 %, bevorzugt mindestens 100 %, aufweist, bestimmt gemäss DIN EN 53504 bei einer Zuggeschwindigkeit von 200 mm/min an hantelförmigen Prüfkörpern (Dicke 2 mm, Länge 75 mm, Steglänge 30 mm, Stegbreite 4 mm) nach Lagerung während 7 Tagen im Normklima.

15. Verwendung der härtbaren Zusammensetzung gemäss einem der Ansprüche 1 bis 12 als elastischer Klebstoff, elastischer Dichtstoff oder elastische Beschichtung.
